# EUROPEAN PATENT APPLICATION

(11) **EP 3 805 093 A1**
(43) Date of publication of application: **14.04.2021**
(21) Application number: 18920338.3
(22) Date of filing: 31.05.2018
(51) Int. Cl.: B64C 1/30, B64C 3/56

(54) **RACK AND UNMANNED AERIAL VEHICLE**

(71) Applicant: SZ DJI Technology Co., Ltd., Shenzhen, Guangdong 518057 (CN)
(72) Inventor: XIONG, Rongming, Shenzhen, Guangdong 518057 (CN); ZHOU, Zhenhao, Shenzhen, Guangdong 518057 (CN); XIONG, Xianwu, Shenzhen, Guangdong 518057 (CN); LI, Yang, Shenzhen, Guangdong 518057 (CN)
(74) Representative: Goddar, Heinz J.
(86) International application number: PCT/CN2018/089402
(87) International publication number: WO 2019/227445

(57) **Abstract**

The present disclosure provides a frame configured to connect to an arm. The frame includes a top wall, a bottom wall opposite to the top wall, a receiving space between the top wall and the bottom wall. The receiving space is configured to accommodate at least a portion of the arm. A hold member is arranged at one of the top wall and the bottom wall. The hold member abuts against the arm to generate a holding force to hold the arm between the top wall and the bottom wall when the arm is in an unfolded position. The present disclosure further provides an unmanned aerial vehicle (UAV). The hold member abuts against an extension member of the arm to generate the holding force to hold the arm between the top wall and the bottom wall when the arm is in the unfolded position.

## Description

### TECHNICAL FIELD

The present disclosure relates to the technical field of aircraft and, more particularly, to a frame and an unmanned aerial vehicle (UAV).

### BACKGROUND

An unmanned aerial vehicle (UAV) is a kind of unmanned aircraft performing a mission through a control of a radio control device or a remote control device. In recent years, the UAVs have been developed and applied in many fields, such as civilian applications, industrial applications, military applications, and the like. The UAV includes an arm and a body. In some UAVs, the arm and the body are integrated. In some other UAVs, the arm is connected to the body and can be folded or unfolded relative to the body, occupies a small space, and is easy to store.

### SUMMARY

The present disclosure provides a frame and an unmanned aerial vehicle (UAV). When an arm is in an unfolded position, the arm can be hold at the frame.

The present disclosure provides a frame configured to connect to an arm. The frame includes a top wall, a bottom wall opposite to the top wall, a receiving space between the top wall and the bottom wall. The receiving space is configured to accommodate at least a portion of the arm. A hold member is arranged at one of the top wall and the bottom wall. The hold member is configured to abut against the arm to generate a holding force to hold the arm between the top wall and the bottom wall when the arm is in an unfolded position.

The present disclosure provides an unmanned aerial vehicle (UAV) including a frame, a rotation shaft connected to the frame, and an arm connected to the rotation shaft. The arm is configured to switch between the unfolded position and a folded position around the rotation shaft. The frame includes a top wall, a bottom wall opposite to the top wall. The arm includes a mount member connected to the rotation shaft and an extension member configured to extend from the mount member. A hold member is arranged at one of the top wall and the bottom wall. The hold member is configured to abut against the extension member to generate the holding force to hold the arm between the top wall and the bottom wall when the arm is in the unfolded position.

The frame and UAV of the present disclosure have the hold member arranged on the frame. The hold member can abut against the arm to generate the holding force to hold the arm between the top wall and the bottom wall when the arm is in the unfolded position, thereby ensuring a flight performance of the UAV.

### BRIEF DESCRIPTION OF THE DRAWINGS

In order to provide a clearer illustration of technical solutions of disclosed embodiments, the drawings used in the description of the disclosed embodiments are briefly described below. It will be appreciated that the disclosed drawings are merely examples and other drawings can be conceived by those having ordinary skills in the art on the basis of the described drawings without inventive efforts.
FIG. 1 is a schematic cross-sectional view of an unmanned aerial vehicle (UAV) according to an embodiment of the present disclosure.
FIG. 2 is an exploded view of a UAV according to an embodiment of the present disclosure.
FIG. 3 is a partial view of a frame of the UAV in FIG. 2.
FIG. 4 is a partial view of a frame and an arm of the UAV in FIG. 2 being assembled together.
FIG. 5 is a cross-sectional view of the frame in FIG. 3.
FIG. 6 is a partial cross-sectional view of a frame of the UAV in FIG. 2 with an arm in an unfolded state.
FIG. 7 is a partial cross-sectional view of a UAV with an arm in an unfolded state according to another embodiment of the present disclosure.
FIG. 8 is a partial cross-sectional view of a UAV with an arm in an unfolded state according to another embodiment of the present disclosure.

### DETAILED DESCRIPTION OF THE EMBODIMENTS

Hereinafter, technical solutions of the present disclosure will be described with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.

Herein, example embodiments will be described in detail. The examples are shown in the accompanying drawings. When the following description refers to the drawings, the same numbers in different drawings refer to the same or similar elements unless otherwise specified. The implementation manners described in the following exemplary embodiments do not represent all implementation manners consistent with the present disclosure. On the contrary, they are merely examples of devices consistent with some aspects of the present disclosure as detailed in the appended claims.

As described herein, the terms used in the present disclosure are intended to describe example embodiments, instead of limiting the present disclosure. The singular forms of "a," "said," "the," and the like, in the specification and the appended claims are intended to include plural forms unless otherwise defined in the context. It can be understood that the term "and/or" used herein includes any suitable combination of one or more related items listed. Unless otherwise defined, terms such as "front," "rear," "lower," "upper," and/or the like are merely for illustration and not intended to limit a position or a spatial orientation. Terms such as "connected" or "coupled" are not limited to physical or mechanical connections, and may include electrical connections no matter direct or indirect.

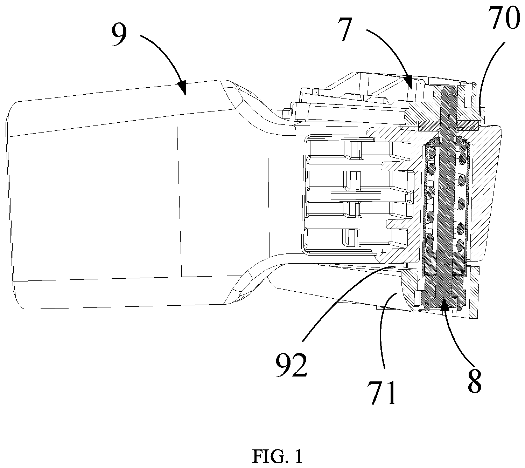

FIG. 1 is a schematic cross-sectional view of an unmanned aerial vehicle (UAV) according to an embodiment of the present disclosure. As shown in FIG. 1, the UAV includes a frame 7, a rotation shaft 8 connected to the frame 7, and an arm 9 connected to the rotation shaft 8. The arm 9 can be folded or unfolded relative to the frame 7. The frame 7 includes an upper wall 70 and a lower wall 71 opposite to each other. The arm 9 is arranged between the upper wall 70 and the lower wall 71. In order to ensure that the arm 9 can be folded or unfolded smoothly, gaps 92 are left between the arm 9 and the upper wall 70 and the lower wall 71. However, due to the existence of the gaps 92, when the arm 9 is in an unfolded state, the arm 9 can vibrate to a certain extent, when being subjected to an external force along an axial direction of the rotation shaft 8, thereby reducing a flight performance of the UAV.

Hereinafter, a UAV of the present disclosure will be described with reference to the accompanying drawings. Unless conflicting, the described embodiments and features of the embodiments can be combined with each other.

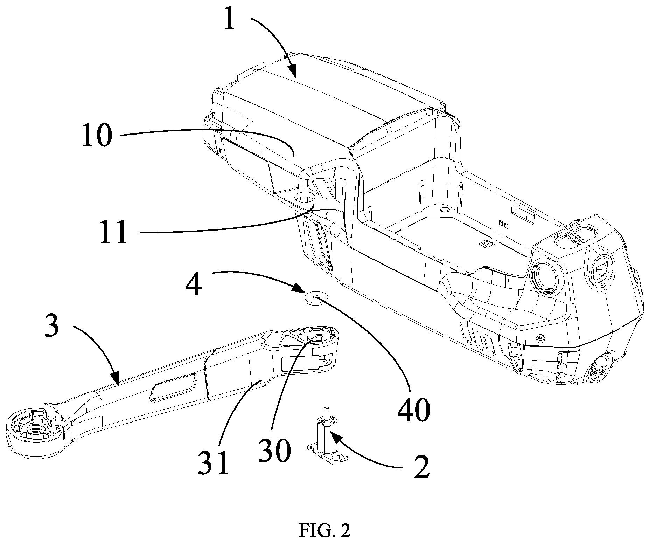

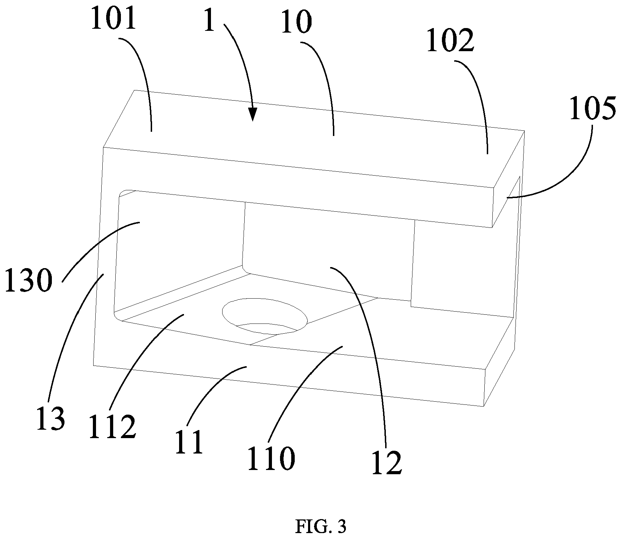

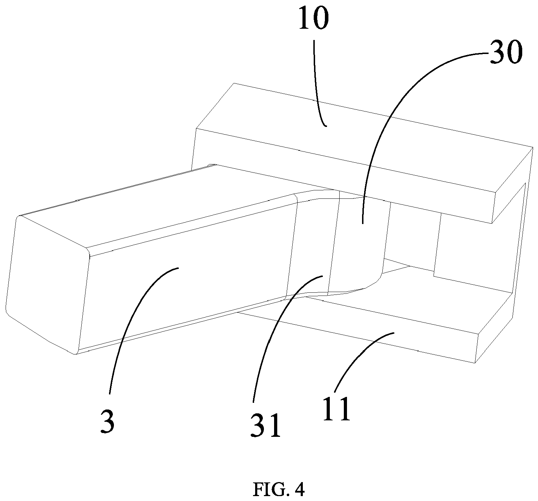

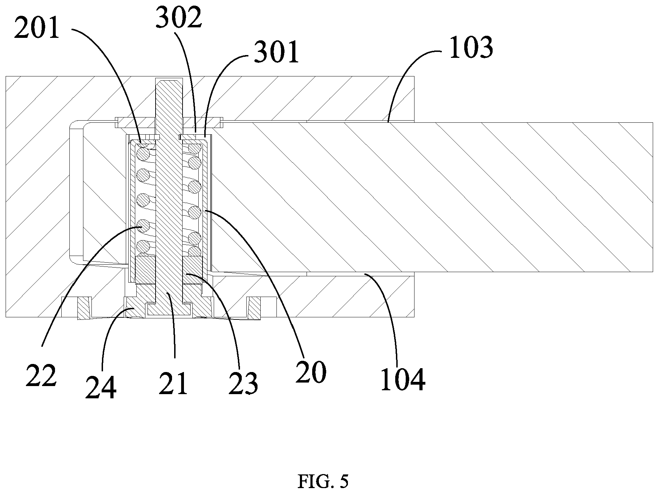

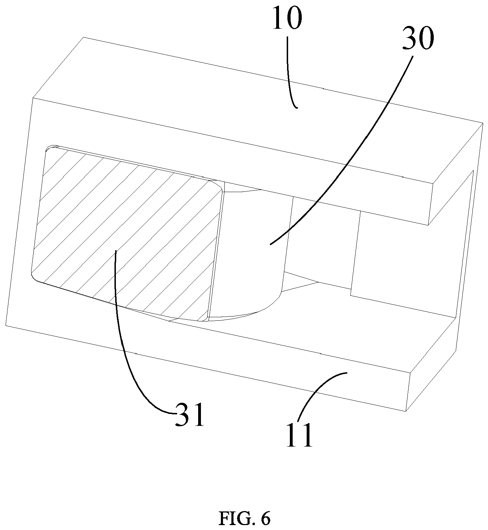

FIGs. 2 to 6 show diagrams of a UAV according to an embodiment of the disclosure. As shown in FIG. 2, the UAV can be applied to, but not limited to, aerial photography, surveying, monitoring, and the like. In some other embodiments, the UAV can further be applied to, for example, agriculture, express delivery, network services, and the like. As shown in FIGs. 2 to 6, in this embodiment, the UAV includes the frame 1, a rotation shaft 2 connected to the frame 1, the arm 3 connected to the rotation shaft 2, a spacer 4 between the arm 3 and the frame 1, and a power device (not shown) connected to the arm 3. The power device can be configured to move the UAV. The power device can include a motor (not shown) and a rotor (not shown) that is driven to rotate by the motor. A rotation of the rotor can cause a movement of the UAV. The movement may include taking off, landing, circling, changing direction, speed, and orientation, or the like.

The frame 1 includes a top wall 10 and a bottom wall 11 opposite to each other, and a receiving space 12 between the top wall 10 and the bottom wall 11. The frame 1 includes a hold member (not shown). When the arm 3 is unfolded, the hold member can abut against the arm to generate a holding force, and hold the arm 3 to the frame 1. The hold member can include an inclined portion 112 formed on at least one of the top wall 10 and the bottom wall 11 of the frame 1. The top wall 10 includes a first end 101 and a second end 102 opposite to the first end 101, and a connection wall 13 connecting the first end 101 and the bottom wall 11. The inclined portion 112 can extend obliquely into the receiving space 12 in a direction from the second end 102 to the first end 101. The top wall 10 includes a first inner side wall 105 proximal to the receiving space 12. The bottom wall 11 includes a second inner side wall 110 proximal to the receiving space 12. In some embodiments, the first inner side wall 105 of the top wall 10 and the second inner side wall 110 of the bottom wall 11 can extend in parallel, and the inclined portion 112 can extend obliquely upward from the second inner side wall 110. The present disclosure is not limited herein, it can also be set as that the inclined portion 112 can extend obliquely downward from the first inner side wall 105 or the inclined portion 112 can include a first inclined portion (not shown) formed at the first inner side wall 105 of the top wall 10 and a second inclined portion (not shown) formed at the second inner side wall 110 of the bottom wall 11. The first inclined portion can extend obliquely downward from the first inner side 105, and the second inclined portion can extend obliquely upward from the second inner side wall 110. The frame 1 further includes the connection wall 13 arranged at the first end 101. The connection wall 13 can connect the top wall 10 and the bottom wall 11, and the connection wall 13 includes a third inner side wall 130 proximal to the receiving space 12. The third inner side wall 130 can extend obliquely toward an outside of the frame 1 and away from the second end 102, such that the arm 3 can have a larger unfolding angle.

The arm 3 can be switched between an unfolded position and a folded position around the rotation shaft 2. The arm 3 includes a mount member 30 arranged in the receiving space 12 and an extension member 31 extending from the mount member 30. The arm 3 can have a wedge structure, i.e., a width of the mount member 30 is smaller than a width of the extension member 31. When the arm 3 is in the unfolded position, the extension member 31 can abut against the top wall 10 and the bottom wall 11, and hold the arm 3 between the top wall 10 and the bottom wall 11, such that the arm 3 is prevented from vibrations caused by the external force along the axial direction of the rotation shaft 2, thereby ensuring the flight performance of the UAV. When the arm 3 is in the unfolded position, there is a first gap 104 between the extension member 31 and the bottom wall 11, and there is a second gap 103 between the arm 3 and the top wall 10 of the frame 1, thereby effectively ensuring that the arm 3 can rotate smoothly around the rotation shaft 2. The mount member 30 includes a through hole 301 through which the rotation shaft 2 can pass. In this embodiment, the mount member 30 can include an abut member 302 proximal to the top wall 10, and the abut member 302 can abut against the rotation shaft 2 to ensure that there is the first gap 104 between the arm 3 and the bottom wall 11 of the frame 1. A gasket 4 is arranged between the mount member 30 and the top wall 10 of the frame 1 to ensure that there is the second gap 103 between the arm 3 and the top wall 10 of the frame 1. The present disclosure is not limited herein. The abut member 302 can be arranged proximal to the bottom wall 11, and the gasket 4 can be arranged between the mount member 30 and the bottom wall 11 of the frame 1. When the arm 3 is in the unfolded position, it can abut against the connection wall 13 to prevent the arm 3 from rotating excessively.

The rotation shaft 2 includes a shaft sleeve 20, a positioning shaft 21, an elastic member 22, an upper clutch member 23, and a lower clutch member 24. The shaft sleeve 20 can be received in the through hole 301 of the arm 3. In this embodiment, the shaft sleeve 20 and the arm 3 can have shapes that can cooperate with each other. When the shaft sleeve 20 is received in the through hole 301, the rotation of the arm 3 can cause the shaft sleeve 20 to rotate coaxially. It can be appreciated that, in some other embodiments, a cooperating manner of the shaft sleeve 20 and the arm 3 can include any other suitable manner, as long as the shaft sleeve 20 and the arm 3 do not rotate relative to each other. For example, the cooperating manner may include a snap fit. In this case, one of an outer side wall of the shaft sleeve 20 and the arm 3 can have a snap, and another one can have a snap groove or a hook. The snap groove or the hook can cooperate with the hook to fix the shaft sleeve 20 in the through hole 301.

The shaft sleeve 20 can include a hollow cylinder with a bottom wall 201. The elastic member 22 and the upper clutch member 23 can be received in the shaft sleeve 20. The bottom wall 201 of the shaft sleeve 20 can have a through hole (not shown). The positioning shaft 21 can pass through the through hole of the bottom wall 201 and the through hole 301 of the arm 3 to expose the arm 3. The gasket 4 can include a hole 40 for the positioning shaft 21 to pass through. The arm 3 and the shaft sleeve 20 can rotate around the positioning shaft 21.

The elastic member 22 can be sleeved on the positioning shaft 21 and received in the shaft sleeve 20. The elastic member 22 can be fixedly arranged at the bottom wall 201 of the shaft sleeve 20. The elastic member 22 can include a metal spring or a plastic spring.

The upper clutch member 23 can be sleeved on the positioning shaft 21 and received in the sleeve 20. One end of the upper clutch member 23 can abut against the elastic member 22, and another end can be cooperated with the lower clutch member 24. The upper clutch member 23 can rotate synchronously with the shaft sleeve 20. Similar to the cooperating manner of the shaft sleeve 20 and the arm 3, the cooperating manner of the upper clutch member 23 and the shaft sleeve 20 can include any suitable manner, as long as the upper clutch member 23 and the shaft sleeve 20 can rotate synchronously. For example, the cooperating manner can include a shape fit, a snap fit, or the like.

The lower clutch member 24 can be fixedly connected to the frame 1. A side of the lower clutch member 24 cooperated with the upper clutch member 23 can have a convex-wheel structure (not shown), and the convex-wheel structure can include a first protrusion (not shown) and a first recess (not shown). A side of the upper clutch member 23 cooperated with the lower clutch member 24 can have a corresponding structure, and include a second protrusion (not shown) and a second recess (not shown). A shape of the second protrusion can correspond to a shape of the first recess and can be accommodated in the first recess. A shape of the first protrusion can correspond to a shape of the second recess and can be accommodated in the second recess 3. As such, the upper clutch member 23 can be meshed with the lower clutch member 24 when no external force is applied.

When the arm 3 is folded to a folded state or unfolded to the unfolded state, the external force can be applied to the arm 3, such that the arm 3 can be rotated under the external force. The shaft sleeve 20 and the upper clutch member 23 can be driven by the arm 3 to rotate synchronously. Since the lower clutch member 24 can be fixed on the frame 1, the upper clutch member 23 can rotate relative to the lower clutch member 24 driven by a rotation force of the arm 3 and the shaft sleeve 20. The second protrusion can be detached from the first recess and slowly slide to the first protrusion, such that the upper clutch member 23 can slide in the shaft sleeve 20 along an axial direction, and compress the elastic member 22. A compression of the elastic member 22 can increase its elastic energy, thereby increasing a driving force for the rotation of the arm 3. When the second protrusion of the upper clutch member 23 rotates to a highest point of the first protrusion, the elastic member 22 can be compressed to a limit position. When the upper clutch member 23 continues to rotate relative to the lower clutch member 24, the second protrusion can slide from the highest point of the first protrusion to the first recess, and the elastic force of the elastic member 22 can be released. At this time, the external force applied to the arm 3 can be removed, and the arm 3 can be automatically unfolded or folded under the elastic force of the elastic member 22. When the first protrusion is received in the first recess, the elastic force of the elastic member 22 can be completely released. If the external force is not applied to rotate the arm 31 anymore, the upper clutch member 23 will not rotate relative to the lower clutch member 24, such that the arm 3 can be limited. That is, the arm 3 can be locked in the unfolded or folded state.

In this embodiment, the rotation shaft 2 includes the shaft sleeve 20. The present disclosure is not limited herein. The shaft sleeve 20 can be omitted. The elastic member 22, the upper clutch member 23, and the lower clutch member 24 can be sequentially sleeved on the positioning shaft 21 and directly received in the through hole 301 of the arm 3. In some embodiments, the convex-wheel structure can include the first protrusion and the second protrusion. The present disclosure is not limited herein, and the number of protrusions may be one, two, or more than two.

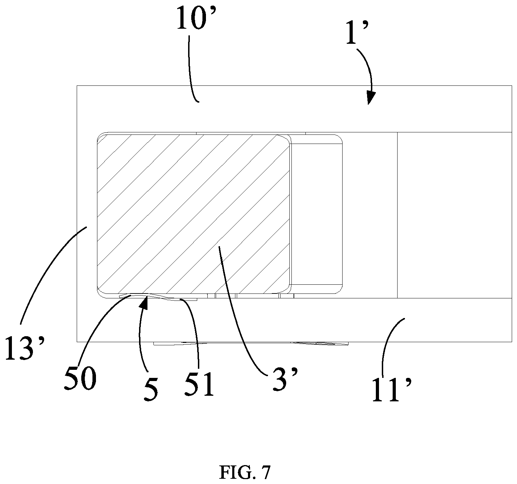

As shown in FIG. 7, in another embodiment, the hold member includes an elastic sheet 5 arranged at a bottom wall 11' of a frame 1'. The elastic sheet 5 is proximal to a connection wall 13'. The elastic sheet 5 includes a fixing portion 51 fixed to the bottom wall 11' and an elastic portion 50 extending from the fixing portion 51, and the elastic portion 50 can be arranged between the connection wall 13' and the fixing portion 51. When the arm 3' is in the unfolded position, the arm 3' can abut against the elastic portion 50, and hold the arm 3' between a top wall 10' and a bottom wall 11'. The arm 3' can be prevented from vibration caused by an external force along an axial direction of a rotation shaft 2, thereby ensuring the flight performance of the UAV. The present disclosure is not limited herein. In another embodiment, the elastic sheet 5 can be arranged at the top wall 10' of the frame 1'.

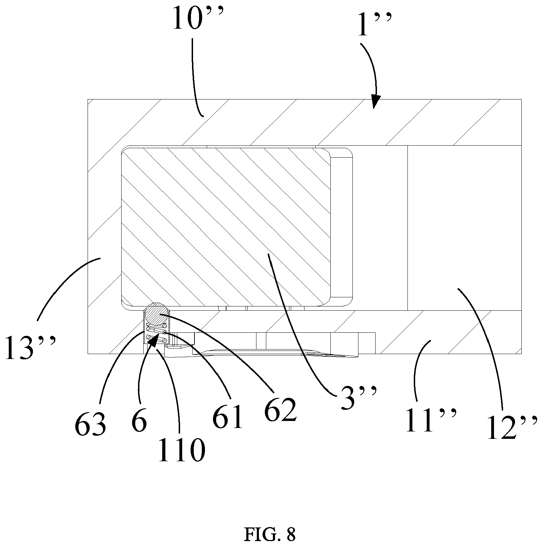

As shown in FIG. 8, in another embodiment, the hold member includes a plunger 6 arranged at a bottom wall 11" of the frame 1". The plunger 6 can be arranged proximal to the connection wall 13". The plunger 6 can include an elastic member 61 and an abut member 62 connected to the elastic member 61, and the abut member 62 can extend into a receiving space 12" to abut against the arm 3". The abut member 62 can have a spherical shape. The plunger 6 can include a sleeve 63 accommodating the elastic member 61 and the abut member 62, and the abut member 62 may be partially exposed from the sleeve 63. The bottom wall 11" can include a recess 110 for accommodating the plunger 6. When the arm 3" is in the unfolded position, the abut member 62 can abut against the arm 3", and the arm 3" can be hold between a top wall 10" and the bottom wall 11". The arm 3" can be prevented from vibration caused by an external force along an axial direction of a rotation shaft 2, thereby ensuring the flight performance of the UAV. The present disclosure is not limited herein. In another embodiment, the plunger 6 may be mounted at the top wall 10' of the frame 1'.

The UAV of the present disclosure can have the hold member arranged at the frame 1. When the arm 3 is in the unfolded position, the hold member 3 can abut against the arm 3 to generate the holding force. As such, the arm 3 can be prevented from the vibration caused by the external force along the axial direction of the rotating shaft 2, thereby ensuring the flight performance of the UAV. The hold member can include a wedge-shaped structure arranged at the frame 1, the elastic sheet 5 arranged at the top wall 10, bottom wall 11 of the frame 1, or the top wall 10, or the plunger 6 arranged at the bottom wall 11.

It should be noted that, herein, the relational terms such as "first" and "second" are merely used to distinguish one entity or operation from another entity or operation, and are not intended to indicate or imply any such relationship or sequence of the entities or operations. The terms "comprising," "including," or any other variations thereof are intended to encompass non-exclusive inclusion, such that a process, method, article, or device including a series of elements can include not only the listed elements, but also non-listed elements, or further include elements inherent to the process, method, article, or device. Unless otherwise specified, the element defined by the sentence "including a..." is not intended to exclude the existence of other same elements in the process, method, article, or device including the element.

The devices provided by the embodiments of the present disclosure are described in detail, and the examples are used to illustrate the principle and implementation of the present disclosure. The description of the embodiments is merely for helping to understand the core idea of the present disclosure. For those of ordinary skill in the art, according to the idea of the present disclosure, there will be changes in the specific implementation and the scope of disclosure. The content of the specification should not be considered as a limitation of the disclosure.

A portion of the disclosure of this patent document (e.g., the claims, description, drawings, and abstract) contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

## Claims

1. A frame connected to an arm, **characterized in that**, the frame comprises a top wall, a bottom wall opposite to the top wall, and a receiving space between the top wall and the bottom wall; the receiving space is configured to accommodate at least a portion of the arm; a hold member is arranged at one of the top wall and the bottom wall; the hold member abuts against the arm to generate a holding force to hold the arm between the top wall and the bottom wall when the arm is in an unfolded position.

2. The frame according to claim 1, **characterized in that**, the hold member includes an inclined portion formed on at least one of the top wall or the bottom wall of the frame; the top wall includes a first end, a second end opposite to the first end, and a connection wall connecting the first end and the bottom wall; the inclined portion extends obliquely into the receiving space in a direction from the second end to the first end.

3. The frame according to claim 2, **characterized in that**, the top wall includes a first inner side wall proximal to the receiving space; the first inclined portion is formed at the inner side wall of the top wall.

4. The frame according to claim 3, **characterized in that**, the bottom wall includes a second inner side wall proximal to the receiving space; the first inner side wall of the top wall and the second inner side wall of the bottom wall extend in parallel; the inclined portion extends obliquely downward from the first inner side wall.

5. The frame according to claim 2, **characterized in that**, the bottom wall includes a second inner side wall proximal to the receiving space; the inclined portion is formed at the second inner side wall of the bottom wall.

6. The frame according to claim 5, **characterized in that**, the top wall includes a first inner side wall proximal to the receiving space; the first inner side wall of the top wall and the second inner side wall of the bottom wall extend in parallel; the inclined portion extends obliquely upward from the second inner side wall.

7. The frame according to claim 2, **characterized in that**, the top wall includes a first inner side wall proximal to the receiving space; the bottom wall includes a second inner side wall proximal to the receiving space; the inclined portion includes a first inclined portion formed at the first inner side wall of the top wall and a second inclined portion formed at the second inner side wall of the bottom wall; the first inclined portion extends obliquely downward from the first inner side; the second inclined portion extends obliquely upward from the second inner side wall.

8. The frame according to claim 1, **characterized in that**, the hold member includes an elastic sheet arranged at the top wall or the bottom wall of the frame and abutting against the arm when the arm is in the unfolded position.

9. The frame according to claim 8, **characterized in that**, the frame comprises a connection wall connecting the top wall and the bottom wall; the elastic sheet is arranged proximal to the connection wall.

10. The frame according to claim 8, **characterized in that**, the elastic sheet includes a fixing portion and an elastic portion; the fixing portion is fixed to the frame; the elastic portion extends into the receiving space to abut against the arm; the elastic portion is arranged between the connection wall and the fixing portion.

11. The frame according to claim 1, **characterized in that**, the hold member includes a plunger arranged at the top wall or the bottom wall of the frame; the plunger includes an elastic member and an abut member connected to the elastic member; the plunger extends into the receiving space to abut against the arm.

12. The frame according to claim 11, **characterized in that**, the plunger is arranged proximal to a connection wall.

13. The frame according to claim 11, **characterized in that**, the abut member has a spherical shape.

14. The frame according to any one of claims 11 to 13, **characterized in that**, the plunger includes a sleeve accommodating the elastic member and the abut member; the abut member is partially exposed from the sleeve.

15. An unmanned aerial vehicle (UAV), **characterized in that**, comprises a frame, a rotation shaft connected to the frame, and an arm connected to the rotation shaft; the arm is switched between an unfolded position and a folded position around the rotation shaft; the frame includes a top wall and a bottom wall opposite to the top wall; the arm includes a mount member connected to the rotation shaft and an extension member extends from the mount member; a hold member arranged at one of the top wall and the bottom wall; the hold member abuts against the extension member to generate a holding force to hold the arm between the top wall and the bottom wall when the arm is in the unfolded position.

16. The UAV according to claim 15, **characterized in that**, the hold member includes an inclined portion formed on at least one of the top wall or the bottom wall of the frame; the top wall includes a first end, a second end opposite to the first end, and a connection wall connecting the first end and the bottom wall; the inclined portion extends obliquely into the receiving space in a direction from the second end to the first end.

17. The UAV according to claim 16, **characterized in that**, the top wall includes a first inner side wall proximal to the receiving space; the inclined portion is formed at the first inner side wall of the top wall.

18. The UAV according to claim 17, **characterized in that**, the bottom wall includes a second inner side wall proximal to the receiving space; the first inner side wall of the top wall and the second inner side wall of the bottom wall extend in parallel; the inclined portion extends obliquely downward from the first inner side wall.

19. The UAV according to claim 16, **characterized in that**, the bottom wall includes a second inner side wall proximal to the receiving space; the inclined portion is formed at the second inner side wall of the bottom wall.

20. The UAV according to claim 19, **characterized in that**, the top wall includes a first inner side wall proximal to the receiving space; the first inner side wall of the top wall and the second inner side wall of the bottom wall extend in parallel; the inclined portion extends obliquely upward from the second inner side wall.

21. The UAV according to claim 16, **characterized in that**, the top wall includes a first inner side wall proximal to the receiving space; the bottom wall includes a second inner side wall proximal to the receiving space; the inclined portion includes a first inclined portion formed at the first inner side wall of the top wall and a second inclined portion formed at the second inner side wall of the bottom wall; the first inclined portion extends obliquely downward from the first inner side; the second inclined portion extends obliquely upward from the second inner side wall.

22. The UAV according to any one of claims 15 to 21, **characterized in that**, a width of the mount member along an axial direction of the rotation shaft is smaller than a width of the extension member along the axial direction of the rotation shaft.

23. The UAV according to claim 22, **characterized in that**, the mount member includes a through hole through which the rotation shaft passes; the mount member includes an abut member proximal to the top wall or the bottom wall; the abut member abuts against the rotation shaft.

24. The UAV according to claim 15, **characterized in that**, the hold member includes an elastic sheet arranged at the top wall or the bottom wall of the frame and abutting against the arm when the arm is in the unfolded position.

25. The UAV according to claim 24, **characterized in that**, the frame comprises a connection wall connecting the top wall and the bottom wall; the elastic sheet is arranged proximal to the connection wall.

26. The UAV according to claim 25, **characterized in that**, the elastic sheet includes a fixing portion and an elastic portion; the fixing portion is fixed to the frame; the elastic portion extends into the receiving space to abut against the arm; the elastic portion is arranged between the connection wall and the fixing portion.

27. The UAV according to claim 15, **characterized in that**, the hold member includes a plunger arranged at the top wall or the bottom wall of the frame; the plunger includes an elastic member and an abut member connected to the elastic member; the plunger extends into the receiving space to abut against the arm.

28. The UAV according to claim 27, **characterized in that**, the frame includes a connection wall connecting the top wall and the bottom wall; the plunger is arranged proximal to a connection wall.

29. The UAV according to claim 27, **characterized in that**, the abut member has a spherical shape.

30. The UAV according to any one of claims 27 to 29, **characterized in that**, the plunger includes a sleeve accommodating the elastic member and the abut member; the abut member is partially exposed from the sleeve.
